# DEMANDE DE BREVET EUROPEEN

(11) **EP 1 621 439 A1**
(43) Date de publication de la demande: **01.02.2006**
(21) Numéro de dépôt: 05291562.6
(22) Date de dépôt: 20.07.2005
(51) Int. Cl.: B61D 17/08

(54) **Procédé pour renforcer localement une structure métallique mince**

(30) Priorité: 30.07.2004 FR 0408475
(71) Demandeur: Alstom Transport S.A., 92300 Levallois-Perret (FR)
(72) Inventeur: Roll, Stéphane, 67110 Reichshoffen (FR); Bernhard, Georges, 67580 Mietesheim (FR)
(74) Mandataire: Lagrange, Jacques Etienne M.M.

(57) **Abrégé**

Procédé pour renforcer localement une structure métallique mince (5) selon lequel on réalise sur au moins une face de la structure métallique, dans la zone (4) qui doit être renforcée, un rechargement métallique (9) du type cordon de soudure constitué d'un matériau dont les caractéristiques mécaniques sont supérieures à celles du matériau dont est constitué la structure métallique mince. Application à une structure de véhicule ferroviaire.

## Description

La présente est relative à un procédé pour renforcer localement une structure métallique mince.

Les structures de caisses de véhicule tels que les véhicules ferroviaires, sont constituées de panneaux métalliques mis en forme et découpés de façon à présenter par exemple des ouvertures telles que des baies ou des ouvertures de portes pour les faces.

Ces panneaux métalliques doivent pouvoir résister à des cas de chargement répartis de façon non uniformes. Afin d'assurer une résistance adaptée à la répartition des forces et d'optimiser la masse de ces panneaux, on réalise par exemple des panneaux composites dont une partie est constituée de tôles en un matériau ayant une certaine résistance mécanique et une certaine épaisseur, et une autre partie constituée de tôles en matériau ayant une résistance mécanique plus élevée ou de tôles ayant des épaisseurs plus élevées. On réalise aussi des renforcements en rajoutant des éléments métalliques en surépaisseur tels que des montants en tôle ou des montants comportant des pièces moulées voire forgées. Tous ces renforcements présentent l'inconvénient de compliquer la fabrication des panneaux métalliques, d'augmenter les coûts et la masse de ces panneaux. Or, certaines zones qui ont besoin d'être renforcées ne nécessitent pas de moyens de renforcement aussi importants. C'est notamment le cas des angles de baies qui sont soumis à des forces d'épreuves importantes lors des essais d'homologation de la structure de caisse du véhicule mais qui, en service, sont soumis à des forces peu importantes. La nécessité de renforcer ces angles pour leur permettre de résister aux cas de chargement dans les conditions d'homologation, conduit à réaliser des renforts qui sont parfois complexes, coûteux et qui augmentent inutilement la masse des véhicules.

Le but de la présente invention est de remédier à cet inconvénient en proposant un moyen pour renforcer localement des structures métalliques minces de façon économique, rapide et commode.

A cet effet, la présente invention a pour objet un procédé pour renforcer localement une structure métallique mince selon lequel on réalise sur au moins une face de la structure métallique, dans la zone qui doit être renforcée, un rechargement métallique du type cordon de soudure, constitué d'un matériau dont les caractéristiques mécaniques sont supérieures à celles du matériau dont est constitué la structure métallique mince. Il en découle une structure composite constituée d'un substrat et d'un dépôt, l'ensemble ayant des caractéristiques mécaniques, tels que limite élastique (Re) et résistance maximale de rupture (Rm) plus élevées qu'avant traitement.

De préférence, le rechargement est réalisé avec un matériau du même groupe métallique que le matériau constitutif de la structure métallique mince.

Le matériau constitutif de la structure métallique mince peut être un acier inoxydable et le matériau de rechargement peut alors être une stellite.

De préférence, le rechargement métallique est disposé selon les lignes de sollicitations, mais il peut également être disposé selon au moins une surface.

Le rechargement peut être effectué sur deux faces, dans des zones en regard l'une de l'autre et également sur le champ (épaisseur de la structure métallique mince).

Le rechargement métallique peut, par exemple, être réalisé par laser.

L'invention concerne également une structure métallique mince renforcée localement par des rechargements métalliques.

La structure métallique mince constitue, par exemple, un élément de structure d'un véhicule et notamment d'un véhicule ferroviaire, d'un véhicule routier ou d'un bateau.

En particulier, lorsque le véhicule est un véhicule ferroviaire, les zones renforcées sont, par exemple, des points singuliers d'un panneau de caisse tels qu'un angle de baie, de porte, ouvertures dans la face, une traverse, ou un coussinet dans la zone de contact de la caisse avec un bogie.

L'invention va maintenant être décrite plus en détail mais de façon non limitative en regard des figures annexées dans lesquelles :
- la figure 1 représente une vue en perspective d'un panneau latéral appelé face, d'une structure de caisse de véhicule ferroviaire ;
- la figure 2 représente une vue partielle d'un angle de baie d'une face latérale de véhicule ferroviaire ;
- les figures 3A, 3B et 3C représentent trois modes de réalisation d'un renforcement d'un angle de baie de panneau latéral de véhicule ferroviaire, vu en coupe ;
- la figure 4 représente un autre mode de réalisation d'un renforcement local d'un angle de baie de panneau latéral de caisse de véhicule ferroviaire, mode tenant compte de la répartition du champ de contrainte.

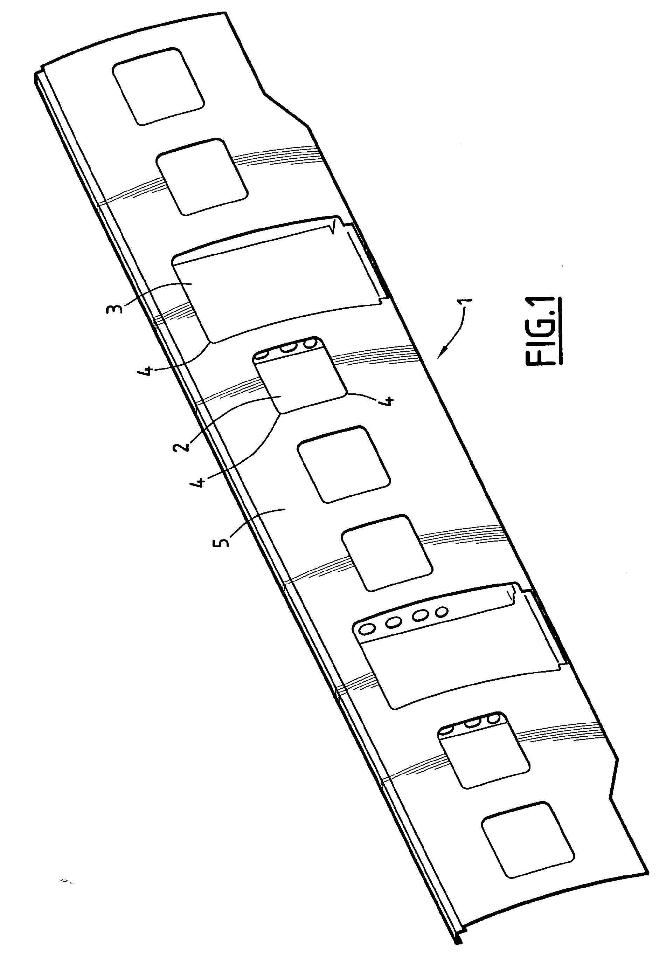

Le panneau latéral de caisse de véhicule ferroviaire repéré généralement par 1 à la figure 1 est une structure constituée d'une ou plusieurs tôles minces découpées et assemblées de façon connue notamment par soudage, ce panneau comportant notamment une pluralité d'ouvertures telles que des baies 2 destinées à former des fenêtres, ou des ouvertures plus importantes 3 destinées à constituer des portes. Les angles 4 de ces ouvertures sont des zones dans lesquelles il peut y avoir des concentrations de contraintes qui affectent la résistance mécanique des panneaux de structure dans ces zones singulières. En service, ces zones 4 ne sont en général pas particulièrement sollicitées, mais lors des essais d'homologation des véhicules, ces zones 4 sont soumis à des contraintes importantes auxquels elles doivent résister sans qu'il y ait plastification locale du métal. Pour renforcer ces zones 4, on réalise un renforcement par rechargement à l'aide d'un matériau métallique à hautes caractéristiques mécaniques.

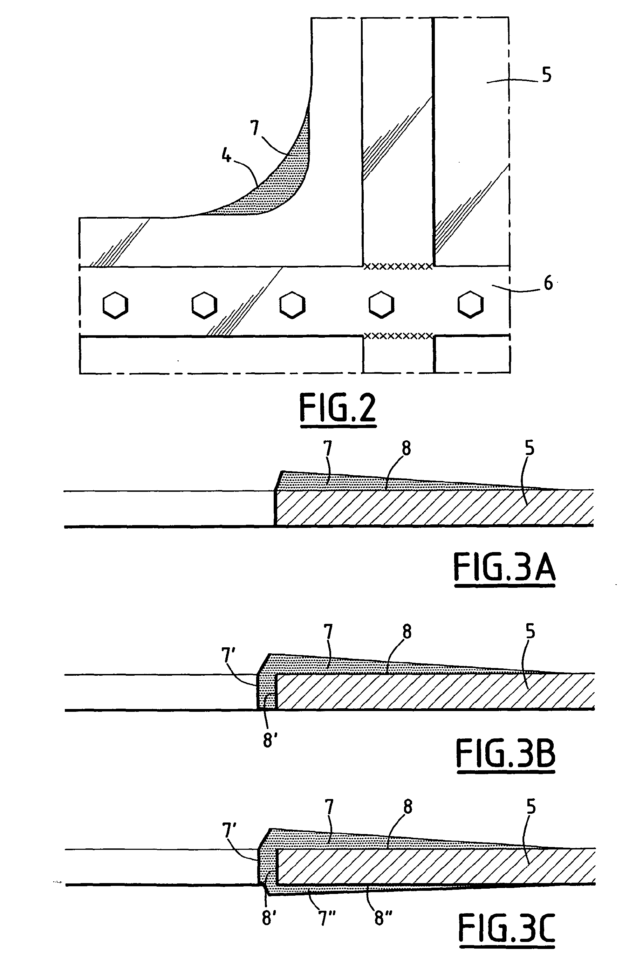

Comme représentée agrandie à la figure 2, la tôle 5 comporte une découpe arrondie qui forme un angle de baie 4. Autour de la découpe de l'angle de baie sont disposés, sur la tôle 5, des renforts 6 qui assurent la raideur générale de la structure de la face.

Le voisinage immédiat de l'angle de baie 4, comporte un rechargement de renfort 7, réalisé selon une forme générale de croissant, mais qui peut être d'une forme plus adaptée comme ce sera explicité plus loin. Comme représenté aux figures 3A, 3B, 3C, le renforcement de l'angle de baie 4 peut être réalisé sur une seule face 8 de la tôle 5. On obtient alors le rechargement de renfort. Le renforcement peut être réalisé à la fois sur une face 8 de la tôle 5 et sur le champ 8' de la tôle 5 dans la zone de découpe. On obtient alors un rechargement de renfort 7 et un rechargement de renfort 7' qui prolonge le rechargement de renfort 7 sur la tranche de la tôle 5. Le renforcement peut également être réalisé à la fois sur la face supérieure 8 et sur la face inférieure 8", et sur la tranche 8'. On obtient alors des rechargements de renfort 7, 7' et 7" qui entourent la découpe de la tôle 5.

Le rechargement de renfort est constitué d'un dépôt obtenu par rechargement d'un apport métallique dont la composition est adaptée à la composition du métal de la tôle de soutien dont est constitué la structure. Il en est de même des autres rechargements. Ce rechargement peut être effectué à l'aide des techniques connues de rechargement du type rechargement par soudure, utilisées par exemple pour faire du rechargement dur ou d'autres rechargements, et qui consistent à envoyer sur la surface de la tôle qui est chauffée localement, un métal sous forme de poudre métallique ou fil métallique, chauffée de telle sorte que, à la surface de la tôle, ce métal fonde, se soude et forme sur la surface de la tôle une couche du type cordon de soudure.

Dans le cadre de l'invention, le rechargement est réalisé de préférence à l'aide d'un procédé de rechargement assisté par laser utilisant une buse coaxiale laser décrite notamment dans le brevet EP 0 74 580 ou dans le brevet US 5,418,350. Cette buse permet d'envoyer simultanément sur une surface bien délimitée de la tôle, une poudre métallique portée par un gaz inerte, un gaz secondaire d'accompagnement et un faisceau laser qui assure à la fois de chauffage local de la tôle et la fusion de la poudre métallique. Le procédé conduit à une bonne liaison de la couche déposée avec le substrat en ne produisant qu'un échauffement très superficiel du substrat, ce qui a pour avantage de peu ou pas affecter les propriétés mécaniques du substrat et surtout limiter les déformations de la structure traitée.

Le dépôt se fait en formant un cordon de soudure qui peut recouvrir une surface de forme quelconque, par balayage de celle-ci. La surface peut également être de forme circulaire et être recouverte par un dépôt réalisé en spirale.

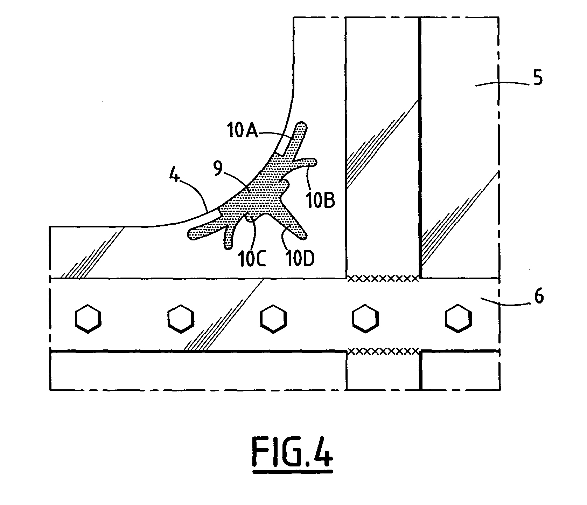

On peut également, et c'est un mode de réalisation préféré, réaliser un dépôt tel que celui qui est représenté à la figure 4. Dans le mode de réalisation, l'angle de baie 4 de la tôle 5 est renforcé par un dépôt 9, constitué d'une pluralité de cordons 10A, 10B, 10C et 10D, s'étendant le long des lignes de forces principales suivant le champs de contraintes sous les différents cas de chargement auxquels est soumis l'angle de baie. Ces cordons forment une structure du type « en arrête de poisson ».

La nature du matériau de rechargement doit être adaptée à la nature du substrat (c'est-à-dire de la tôle) sur lequel il est déposé. Ce matériau de rechargement peut être choisi parmi les matériaux de soudage ou les matériaux de rechargement connus de l'homme de métier, adaptés au matériau dont est constituée la tôle. La composition du matériau de rechargement peut également faire l'objet d'adaptation au cas par cas.

D'une façon générale, on choisit le matériau de rechargement de telle sorte que la limite d'élasticité du dépôt est plus élevée que celle du substrat, et de telle sorte que l'allongement à rupture du dépôt est, de préférence, au moins comparable à celui du substrat en fin de traitement. De préférence, la limite d'élasticité du dépôt est supérieure de 25 %, mieux 50 %, mieux encore de 80 % à la limite d'élasticité du substrat.

La compatibilité du matériau déposé et du substrat, a aussi pour but et avantage d'éviter les problèmes de corrosion. Pour cela, les métaux correspondant au matériau déposé et au substrat, doivent être de la même famille, notamment afin d'éviter d'engendrer des phénomènes de pile électrochimique.

L'homme de métier sait choisir les matériaux adaptés, notamment lorsque le substrat est constitué d'aluminium, d'alliages d'aluminium ou d'acier tel qu'un acier inoxydable austénitique, acier inoxydable ferritique ou un acier au carbone.

L'épaisseur du dépôt de renforcement peut être de l'ordre de quelques dixièmes de millimètres, à quelques millimètres, et de préférence être comprise entre 0,5 mm et 1,5 mm.

A titre d'exemple, pour renforcer un angle de baie découpé dans une tôle en acier inoxydable ferritique du type 1.4003, selon la norme EN 10.088-2, d'épaisseur 2,5 mm, on réalise une couche de renforcement de 0,98 mm d'épaisseur, obtenue à partir d'une poudre de stellite Gr25 (connue en elle-même). La limite d'élasticité de la stellite déposée est le double de celle de l'acier ferritique dont est constituée la tôle.

On obtient ainsi une face latérale de véhicule ferroviaire dont les angles de baies ne sont pas plastifiés lors des essais d'homologation. En outre cette paroi est à peine alourdie et le coût de réalisation des traitements de renforcement est faible.

Ce procédé de renforcement peut être utilisé pour renforcer localement une grande variété de structures constituées de tôles découpées et assemblées par exemple par soudure.

Ces structures sont notamment des panneaux de caisses de véhicules ferroviaires ou de véhicule routier, ou des éléments de bâteaux.

Les zones renforcées peuvent être des zones soumises à des sollicitations particulières du fait de la présence d'ouvertures ayant des formes présentant des points singuliers (rayons de courbures faibles). Ce peut être également des zones qui doivent être renforcées car elles sont destinées à remplir des fonctions particulières. Il s'agit notamment de traverses de liaison caisse bogie, ou de zones formant coussinet, par exemple pour la liaison entre la caisse d'un véhicule et un bogie.

Les applications qui viennent d'être décrites ne sont pas limitatives, et l'homme du métier saura appliquer le procédé selon l'invention à toute autre structure adaptée.

## Revendications

1. Procédé pour renforcer localement une structure métallique mince (5) **caractérisée en ce qu'**on réalise sur au moins une face (8, 8") de la structure métallique, dans la zone (4) qui doit être renforcée, un rechargement métallique (7, 7", 9) du type cordon de soudure constitué d'un matériau dont les caractéristiques mécaniques sont supérieures à celles du matériau dont est constitué la structure métallique mince.

2. Procédé selon la revendication 1, **caractérisé en ce que** le matériau de rechargement est du même groupe métallique que le matériau constitutif de la structure métallique mince.

3. Procédé selon la revendication 2, **caractérisé en ce que** le matériau constitutif de la structure métallique mince est un acier inoxydable et le matériau de rechargement est une stellite.

4. Procédé selon l'une quelconque des revendications 1 à 3, **caractérisé en ce que** le rechargement métallique (9) est disposé selon des lignes de renforcement (10A, 10B, 10C, 10D).

5. Procédé selon l'une quelconque des revendications 1 à 3, **caractérisé en ce que** le rechargement (7, 7") est disposé selon au moins une surface (8, 8") de la structure métallique.

6. Procédé selon la revendication 5, **caractérisé en ce que** le rechargement est réalisé en outre sur la tranche (8') de la structure métallique.

7. Procédé selon l'une quelconque des revendications 1 à 6, **caractérisé en ce que** le rechargement (7, 7") est effectué sur deux faces (8, 8"), dans des zones en regard l'une de l'autre.

8. Procédé selon l'une quelconque des revendications 5, 6 ou 7, **caractérisé en ce que** le rechargement (7, 7") disposé selon au moins une surface est constitué d'un dépôt en spirale.

9. Procédé selon l'une quelconque des revendications 1 à 8, **caractérisé en ce que** le rechargement métallique est réalisé par laser.

10. Structure métallique mince **caractérisée en ce qu'**elle est renforcée localement par des rechargements métalliques, selon l'une quelconque des revendications 1 à 9.

11. Structure métallique mince selon la revendication 10, **caractérisée en ce qu'**elle constitue un élément de structure d'un véhicule et notamment d'un véhicule ferroviaire, d'un véhicule routier ou d'un bateau.

12. Structure métallique mince selon la revendication 11, **caractérisée en ce que** le véhicule et un véhicule ferroviaire et **en ce que** les zones renforcées sont au moins l'une des zones telles que un point singulier d'un panneau de caisse, notamment un angle de baie, une traverse, un coussinet dans la zone de contact de la caisse avec un bogie.
